# FASCICULE DE BREVET EUROPEEN

(11) **EP 2 545 206 B1**
(45) Date de publication et mention de la délivrance du brevet: **02.04.2014**
(21) Numéro de dépôt: 11708808.8
(22) Date de dépôt: 11.03.2011
(51) Int. Cl.: C25B 1/04, C25B 9/04, C25B 9/18

(54) **ELECTROLYSEUR A HAUTE TEMPERATURE (EHT) A EMPILEMENT DE CELLULES D'ELECTROLYSE A SURETE DE FONCTIONNEMENT AMELIOREE ET RENDEMENT ELEVE**
HOCHTEMPERATURELEKTROLYSATOR (HTE) MIT ELETROLYSEZELLSTAPEL, ERHÖHTER BETRIEBSZUVERLÄSSIGKEIT UND HOHER LEISTUNG
HIGH TEMPERATURE ELECTROLYZER (HTE) HAVING A STACK OF ELECTROLYSIS CELLS AND IMPROVED OPERATING RELIABILITY AND HIGH EFFICIENCY

(30) Priorité: 12.03.2010 FR 1051783
(43) Date de publication de la demande: 16.01.2013
(73) Titulaire: Commissariat à l'Énergie Atomique et aux Énergies Alternatives, 75015 Paris (FR)
(72) Inventeur: LE GALLO, Patrick, F-38160 Saint Appolinard (FR); SARRO, Jean-Luc, F-07700 Bourg Saint Andéol (FR); PLANQUE, Michel, F-38180 Seyssins (FR); REYTIER, Magali, 38250 Villard de Lans (FR)
(74) Mandataire: Ilgart, Jean-Christophe
(86) Numéro de dépôt international: PCT/EP2011/053723
(87) Numéro de publication internationale: WO 2011/110674

(56) Documents cités:
- WO-A1-2010/006423
- DE-A1- 2 549 471
- FR-A1- 2 919 618
- FR-A1- 2 921 389
- US-A1- 2002 146 611
- US-A1- 2008 254 333

## Description

### DOMAINE TECHNIQUE

La présente invention concerne un module à enceinte étanche associé à un réacteur d'électrolyse de l'eau à hautes températures (EHT), de type à empilement de cellules, en vue de produire de l'hydrogène.

Le module à enceinte étanche selon l'invention permet une amélioration de la sureté de fonctionnement d'électrolyseurs à hautes températures, en réduisant les risques de fuites susceptibles d'entraîner des pertes de rendement et/ou des casses éventuelles de tout ou partie de ses éléments.

L'invention a trait plus particulièrement au maintien d'un rendement élevé d'un tel module.

Par « hautes températures », il faut comprendre dans le cadre de l'invention, des températures au moins égales à 450°C, typiquement compris entre 600°C et 1000°C.

### ART ANTÉRIEUR

Un électrolyseur à hautes températures (EHT), appelé aussi électrolyse de vapeur d'eau à hautes températures (EVHT), de type à empilement, comporte une pluralité de cellules d'électrolyse élémentaires formées par une cathode et une anode séparées par un électrolyte, les cellules élémentaires étant raccordées électriquement en série au moyen de plaques interconnectrices interposées, en général, entre une anode d'une cellule élémentaire et une cathode de la cellule élémentaire suivante. Une connexion anode-anode suivie par une connexion cathode-cathode est également possible. Les plaques interconnectrices sont des composants conducteurs électroniques formés par au moins une plaque métallique. Ces plaques assurent par ailleurs la séparation entre le fluide cathodique circulant au niveau d'une cellule élémentaire du fluide anodique circulant dans une cellule élémentaire suivante.

L'anode et la cathode sont en matériau poreux dans lequel les gaz peuvent s'écouler.

Dans le cas de l'électrolyse de l'eau pour produire de l'hydrogène à hautes températures, de la vapeur d'eau circule au niveau de la cathode où est généré l'hydrogène sous forme gazeuse, et un gaz drainant peut circuler au niveau de l'anode et collecte ainsi l'oxygène généré sous forme gazeuse à l'anode. La plupart des électrolyseurs à haute température utilise de l'air comme gaz drainant au niveau de l'anode.

A ce jour, la gestion des gaz est donc compliquée puisqu'il faut prévoir deux arrivées de gaz différentes dont une à la cathode et l'autre à l'anode et deux sorties de gaz différentes dont une également à la cathode et l'autre à l'anode.

Cette complication se traduit par une augmentation du risque de fuites possibles, de leurs impacts immédiats avec pour conséquence finale des pertes de rendement plus ou moins importantes et/ou des casses éventuelles dans l'électrolyseur pouvant le rendre inopérant. Le brevet FR 2919618 divulgue un électrolyseur à haute température comprenant un empilement de cellules d'électrolyse dans une enceinte métallique remplie de vapeur d'eau et des moyens de serrage des cellules.

Pour concevoir une solution visant à simplifier la gestion des gaz, les inventeurs ont fait le bilan de toutes les fuites susceptibles de se produire au niveau des parties d'un électrolyseur, avec les phénomènes et leurs impacts qualitatifs relatifs.

Le tableau ci-dessous synthétise ce bilan, les impacts qualitatifs étant par convention classés de 0 à 3 avec :
0 : risque nul,
1 : risque faible,
2 : risque moyen : de l'hydrogène peut brûler,
3 : risque important : une grande quantité d'hydrogène peut brûler.

| **Description** | | **Espèces** | | **Phénomène** | **Impact** |
|---|---|---|---|---|---|
| **De** | **A** | **Quoi** | **dans** | | |
| Entrée cathode | Sortie cathode | H₂O + H₂ | H₂O + H₂ | dilution | 1 |
| Entrée cathode | Entrée anode | H₂O + H₂ | Air | H₂ brûle | 2 |
| Entrée anode | Entrée cathode | Air | H₂O + H₂ | H₂ brûle | 2-3 |
| Entrée anode | Sortie anode | Air | Air + O₂ | dilution | 1-0 |
| Entrée cathode | Sortie anode | H₂O + H₂ | Air + O₂ | H₂ brûle | 2 |
| Entrée anode | Sortie cathode | Air | H₂O + H₂ | H₂ brûle | 3 |
| Sortie cathode | Sortie anode | H₂O + H₂ | Air + O₂ | H₂ brûle | 3 |
| Sortie anode | Sortie cathode | Air + O₂ | H₂O + H₂ | H₂ brûle | 3 |
| Entrée cathode | Air | H₂O + H₂ | Air | H₂ brûle | 2 |
| Entrée anode | Air | Air | Air | Fuite sans incidence | 0 |
| Sortie cathode | Air | H₂O + H₂ | Air | H₂ brûle | 3 |
| Sortie anode | Air | Air + O₂ | Air | perte d'oxygène | 0 |

Les inventeurs sont donc arrivés à la conclusion que le phénomène néfaste prédominant était que l'hydrogène brûle au contact de l'air et que par conséquent, il fallait minimiser la circulation de l'hydrogène et de l'air au sein de l'électrolyseur fonctionnant à hautes températures.

Une solution visant à minimiser la circulation au sein d'un électrolyseur haute température (EHT), de l'hydrogène et de l'air, afin de réduire les risques de fuites susceptibles d'entraîner des pertes de rendement et/ou des casses de tout ou partie de l'électrolyseur qui en découlent, consiste à faire circuler de la vapeur d'eau contenant au plus 1% d'hydrogène à la fois à l'anode (en tant que gaz drainant) et la cathode. Autrement dit, on amène uniquement de la vapeur d'eau contenant au plus 1 % d'hydrogène dans les veines fluides en contact avec l'anode et la cathode.

Ainsi, on amène un débit en entrée de la cathode et l'anode et ce débit est en contact sur toute la cathode et l'anode: la vapeur d'eau contenant au plus 1 % d'hydrogène initialement s'enrichissant en hydrogène au fur et à mesure de sa circulation en contact avec la cathode.

Les pertes de rendement et les casses éventuelles des éléments de l'électrolyseur dues aux fuites sont ainsi réduites.

On prévoit donc une réaction quasi-parfaite à la cathode avec très peu d'apport d'hydrogène (la réaction de réduction étant réalisée dans une phase préalable, la quantité de 1 % contenue dans la vapeur d'eau initiale servant si nécessaire à maintenir l'état réduit) et en apportant comme gaz drainant à l'anode uniquement de la vapeur d'eau très peu hydrogénée.

Le très faible pourcentage (au plus 1 %) d'hydrogène présent à l'anode peut subir une combustion avec l'oxygène produit sans conséquence néfaste.

Ainsi, on peut s'affranchir de solutions sophistiquées d'étanchéité, plus particulièrement au niveau de la traversée d'un interconnecteur en dessous de l'anode par un conduit de récupération de l'hydrogène produit. En effet, à ce niveau si une fuite a effectivement lieu, la vapeur d'eau vient s'intercaler pour former en quelque sorte un joint ou coussin d'eau. La fuite représente en quelque sorte une dilution.

On a ainsi moins d'étanchéités à réaliser. L'architecture d'électrolyseur à empilement de cellules d'électrolyse peut être ainsi simplifiée.

En outre, il est possible de valoriser plus facilement l'oxygène dégagé. En effet, le mélange récupéré à l'anode est quasiment constitué de vapeur d'eau et d'oxygène. La condensation de la vapeur d'eau en aval de l'électrolyseur peut se faire aisément. On peut donc récupérer de l'oxygène pur qui peut être utilisé par la suite. Par exemple, l'oxygène pur récupéré peut être utilisé dans l'industrie chimique.

Pour améliorer encore la sureté de fonctionnement d'un électrolyseur EHT à empilement de cellules, les inventeurs ont en outre pensé à réaliser un module pour électrolyse à hautes températures, comprenant une enveloppe étanche adaptée pour contenir de la vapeur d'eau contenant au plus 1 % d'hydrogène ou un gaz inerte et l'empilement de cellules d'électrolyse étant logé dans l'enveloppe étanche.

Avec un tel module, les étanchéités de l'électrolyseur à réaliser sont moins critiques que pour celles d'un électrolyseur classique. En effet, si l'enveloppe étanche comprend un gaz inerte ou de la vapeur d'eau contenant au plus 1 % d'hydrogène, alors l'électrolyseur est maintenu dans une atmosphère non réactive avec l'hydrogène. En outre, si l'atmosphère est de la vapeur d'eau contenant au plus 1 % d'hydrogène, alors, comparativement à un électrolyseur classique, la conception du système de fluidique de l'électrolyseur est moins complexe puisque l'on peut prévoir une seule et même entrée pour l'anode et la cathode débouchant directement à l'intérieur de l'enveloppe étanche. Il y a donc moins d'étanchéités perfectionnées à réaliser comparativement à un électrolyseur classique.

La sécurité en fonctionnement est accrue à la fois pour l'électrolyseur et l'environnement proche. Il est en outre possible de mettre sous pression l'électrolyseur à hautes températures. Par contre, une telle mise sous pression de l'électrolyseur implique la définition d'une solution permettant de garantir et contrôler la contre-pression susceptible d'être exercée par la vapeur d'eau ou le gaz inerte sur l'enveloppe étanche.

Par ailleurs, dans un tel module, le rendement de l'électrolyseur à empilement continue de dépendre de la qualité de conduction du courant à travers l'empilement et donc de l'effort de compression ou contact, aussi appelé effort de serrage, appliqué sur l'empilement.

Le but de l'invention est donc de proposer un module pour électrolyse à hautes températures, comprenant une enveloppe étanche adaptée pour contenir de la vapeur d'eau contenant au plus 1 % d'hydrogène ou un gaz inerte et pour loger un empilement de cellules d'électrolyse, qui permette de garantir et contrôler à la fois le serrage, c'est-à-dire la compression, de l'empilement et la contre pression susceptible d'être exercée par la vapeur d'eau ou gaz inerte sur l'enveloppe étanche.

### EXPOSÉ DE L'INVENTION

Pour ce faire, selon un premier mode de réalisation, l'invention a pour objet module pour électrolyse à hautes températures, comprenant
- une enveloppe étanche adaptée pour contenir de la vapeur d'eau contenant au plus 1 % d'hydrogène ou un gaz inerte,
- un empilement de cellules d'électrolyse élémentaires formées chacune d'une cathode, d'une anode et d'un électrolyte intercalé entre la cathode et l'anode, au moins une plaque interconnectrice étant agencée entre deux cellules élémentaires adjacentes et en contact électrique avec une électrode d'une des deux cellules élémentaires et une électrode de l'autre des deux cellules élémentaires, la plaque interconnectrice comportant au moins un compartiment cathodique et au moins un compartiment anodique pour la circulation de gaz respectivement à la cathode et l'anode,
l'empilement de cellules d'électrolyse étant logé dans l'enveloppe étanche,
dans lequel l'enveloppe étanche est constituée d'un boitier comprenant un fond et un couvercle solidarisés entre eux, l'empilement de cellules d'électrolyses élémentaires étant assemblé entre deux plaques, dont la plaque inférieure est en appui contre le fond du boitier par l'intermédiaire d'un isolant électrique,
dans lequel des moyens de serrage sont agencés au moins en partie entre la plaque supérieure le couvercle du boitier, les moyens de serrage étant adaptés pour fournir un effort de contact déterminé par compression entre les plaques inférieure et supérieure de l'empilement de cellules,
dans lequel des moyens de serrage comprennent une plaque supplémentaire montée avec ajustement avec jeu dans le boitier et en contact direct avec la plaque supérieure, la plaque supplémentaire étant adaptée pour être déplacée par la vapeur d'eau contenant au plus 1 % d'hydrogène depuis l'extérieur du boitier à travers le couvercle, le déplacement de la plaque supplémentaire générant l'effort de serrage entre les plaques inférieure et supérieure, le jeu de l'ajustement permettant d'alimenter au moins partiellement en vapeur d'eau contenant au plus 1 % d'hydrogène l'empilement de cellules.

Selon un deuxième mode de réalisation de l'invention, la plaque inférieure est directement en appui contre le fond du boitier et les moyens de serrage sont adaptés pour appliquer une charge par gravité depuis l'extérieur du boitier, sur la plaque supérieure au travers d'un soufflet solidarisé avec étanchéité au couvercle du boitier, une pièce électriquement isolante qui permet de transmettre la charge appliquée étant agencée à l'intérieur du boitier entre le soufflet et la plaque supérieure.

Avantageusement, les raccords agencés au travers du fond du boitier sans contact électrique avec leur fixation à celui-ci et permettant la connexion électrique à l'empilement de cellules d'électrolyse depuis l'extérieur du boitier.

L'avantage du deuxième mode comparativement au premier mode de réalisation est de pouvoir avoir un découplage totale entre les différentes fonctions que sont l'alimentation électrique de l'empilement, l'alimentation en vapeur d'eau faiblement ou non hydrogéné de l'empilement, l'alimentation en vapeur d'eau faiblement ou non hydrogéné de l'intérieur du boitier étanche, le serrage par compression de l'empilement des cellules d'électrolyse. On peut ainsi de fait garantir et contrôler plus précisément chacune de ces fonctions.

L'électrolyse de l'eau selon l'invention peut avoir lieu à des températures supérieures à 450°C, typiquement comprises entre 600°C et 1000°C.

Il est prévu de préférence un empilement de cellules d'électrolyse élémentaires formée chacune d'une cathode, d'une d'anode et d'un électrolyte intercalé entre la cathode et l'anode, au moins une plaque interconnectrice étant agencée entre deux cellules élémentaires adjacentes et en contact électrique avec une électrode d'une des deux cellules élémentaires et une électrode de l'autre des deux cellules élémentaires, la plaque interconnectrice comportant au moins un compartiment cathodique et au moins un compartiment anodique pour la circulation de gaz respectivement à la cathode et l'anode, l'empilement de cellules d'électrolyse étant logé dans l'enveloppe étanche.

Selon un mode de réalisation avantageux, l'enveloppe étanche est constituée d'un boitier comprenant un fond et un couvercle solidarisés entre eux, l'empilement de cellules d'électrolyses élémentaires étant assemblé entre deux plaques, dont la plaque inférieure est en appui contre le fond du boitier par l'intermédiaire d'un isolant électrique. On évite ainsi le risque de mise en court-circuit électrique de l'empilement de cellules.

On peut en outre intégrer directement la fonction serrage de l'électrolyseur dans le boitier : cela a pour avantage de ne pas avoir à réaliser des ouvertures supplémentaires et étanchéités associées qui sont nécessaires avec des moyens de serrage à l'extérieur du boitier. Ainsi, des moyens de serrage sont agencés entre la plaque supérieure et le couvercle du boitier, les moyens de serrage étant adaptés pour fournir un effort de contact déterminé entre les plaques interconnectrices et les électrodes.

On peut prévoir plusieurs variantes de réalisation des moyens de serrage agencés entre la plaque supérieure et le couvercle du boitier: il peut s'agir d'une simple cale rigide de hauteur calibrée, d'un vérin.

L'invention concerne également un ensemble comprenant :
- un module pour électrolyse à hautes températures selon l'un des deux modes de réalisation décrit précédemment,
- une source d'alimentation en vapeur d'eau contenant au plus 1 % d'hydrogène ou en gaz inerte relié à l'intérieur de l'enveloppe étanche du module.

Le gaz inerte peut être choisi parmi l'azote ou l'argon. On précise ici que le gaz inerte au sens de l'invention signifie inerte vis-à-vis de l'hydrogène et de l'oxygène.

### BRÈVE DESCRIPTION DES DESSINS

D'autres caractéristiques et avantages ressortiront mieux à la lecture de la description détaillée faite en référence suivante parmi lesquelles :
- la figure 1 est une vue de côté d'un mode de réalisation d'un réacteur pour électrolyse à hautes températures selon la présente invention,
- la figure 1A est une vue en coupe du réacteur de la figure 1 selon le plan A-A en fonctionnement normal d'électrolyse, c'est-à-dire sans casse de cellules d'électrolyse,
- la figure 1B est une vue en coupe du réacteur de la figure 1 selon le plan B-B également en fonctionnement normal,
- la figure 2 est une vue schématique illustrant un phénomène susceptible de se produire au sein du réacteur selon l'invention,
- la figure 3 est une vue schématique d'un module à boitier étanche dans laquelle est logé un réacteur pour électrolyses à haute températures intégrant des moyens de serrage respectivement selon un premier mode de réalisation,
- les figures 4A à 4C sont des vues schématique en perspective, partielle par transparence et en coupe partielle, d'un module à boitier étanche dans laquelle est logé un réacteur pour électrolyses à haute températures intégrant des moyens de serrage respectivement selon un deuxième mode de réalisation ;
- la figure 5 est une vue en perspective en coupe partielle de l'étanchéité réalisée entre fond et couvercle d'un boitier étanche selon l'invention.

### EXPOSÉ DÉTAILLÉ DE MODES DE RÉALISATION PARTICULIERS

On décrit l'invention en relation avec un type d'architecture d'électrolyseur de l'eau à hautes températures pour produire de l'hydrogène. Il va de soi que l'invention peut s'appliquer à d'autres architectures. Les hautes températures auxquelles fonctionne l'électrolyseur représenté sont comprises entre 600°C et 1000°C.

On précise que les termes « amont » et « aval » sont utilisés par référence avec le sens de circulation de la vapeur d'eau et de l'hydrogène produit à la cathode.

On précise que les termes « inférieure » et « supérieure » sont utilisés par référence avec la configuration installée de l'électrolyseur dans le boitier selon l'invention : ainsi la plaque supérieure est la plaque du dessus et celle inférieure est celle du dessous.

On précise que les représentations des différents éléments ne sont pas à l'échelle.

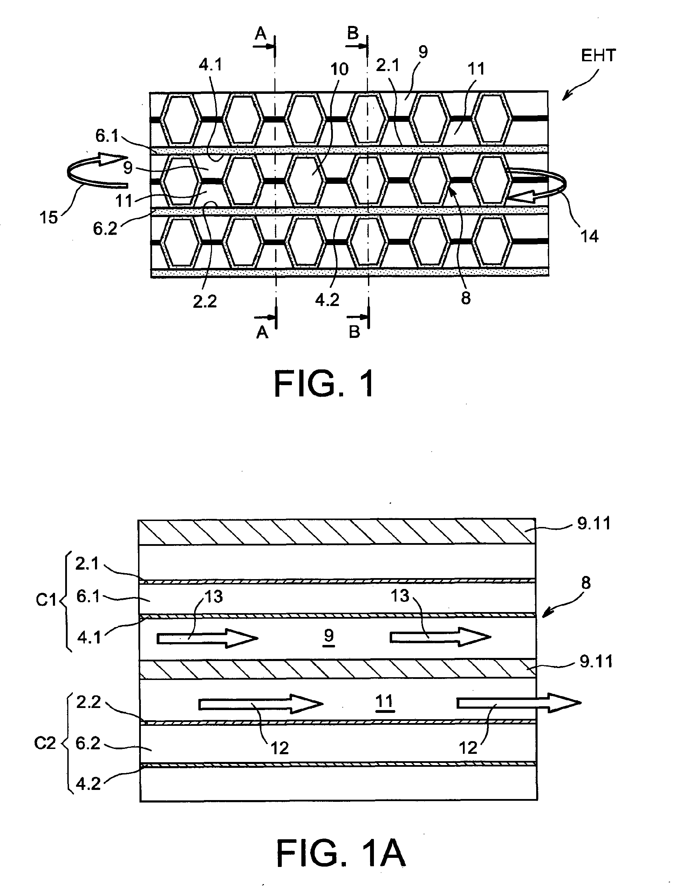

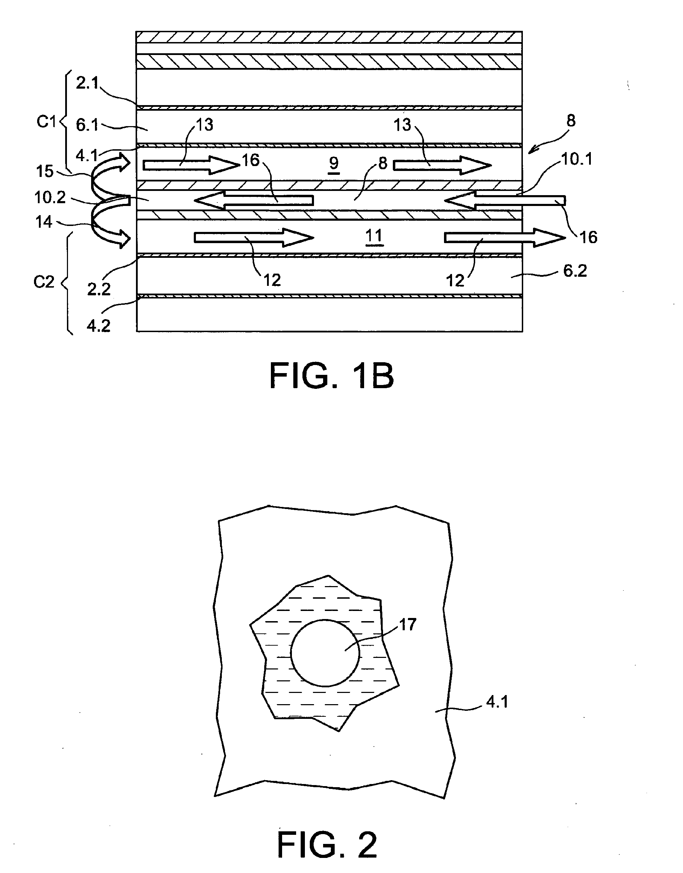

Sur la figure 1, on a représenté un électrolyseur EHT selon la présente invention comportant une pluralité de cellules élémentaires C1, C2... empilées.

Chaque cellule élémentaire comporte un électrolyte disposé entre une cathode et une anode.

Dans la suite de la description, nous décrirons en détail les cellules C1 et C2 et leur interface.

La cellule C1 comporte une cathode 2.1 et une anode 4.1 entre lesquelles est disposé un électrolyte 6.1, par exemple solide généralement d'épaisseur 100 µm pour les cellules dites à électrolyte support et d'épaisseur de quelques µm pour les cellules dites à cathode support.

La cellule C2 comporte une cathode 2.2 et une anode 4.2 entre lesquelles est disposé un électrolyte 6.2.

Les cathodes 2.1, 2.2 et les anodes 4.1, 4.2 sont réalisées en matériau poreux et ont par exemple une épaisseur de 40 µm chacune pour les cellules dites à électrolyte support et une épaisseur de l'ordre de 500 µm et 40 µm respectivement pour les cellules dites à cathode support.

L'anode 4.1 de la cellule C1 est reliée électriquement à la cathode 2.2 de la cellule C2 par une plaque interconnectrice 8 venant en contact avec l'anode 4.1 et la cathode 2.2. Par ailleurs, elle permet l'alimentation électrique de l'anode 4.1 et de la cathode 2.2.

Une plaque interconnectrice 8 est interposée entre deux cellules élémentaires C1, C2. Dans l'exemple représenté, elle est interposée entre une anode d'une cellule élémentaire et la cathode de la cellule adjacente. Mais on pourrait prévoir qu'elle soit interposée entre deux anodes ou deux cathodes.

La plaque interconnectrice 8 définit avec l'anode et la cathode adjacentes des canaux pour la circulation de fluides. Plus précisément, Ils définissent des compartiments anodiques 9 dédiés à la circulation des gaz au niveau de l'anode 4 et des compartiments cathodiques 11 dédiés à la circulation des gaz au niveau de la cathode 2.

Dans l'exemple représenté, un compartiment anodique 9 est séparé d'un compartiment cathodique 11 par une paroi 9.11. Dans l'exemple représenté, la plaque interconnectrice 8 comporte en outre au moins un conduit 10 délimitant avec la paroi 9.11, les compartiments anodiques 9 et les compartiments cathodiques 11.

Dans l'exemple représenté, la plaque interconnectrice comporte une pluralité de conduits 10 et une pluralité de compartiments anodiques 9 et cathodiques 11. De manière avantageuse, le conduit 10 et les compartiments ont des sections hexagonales, en nid d'abeille, ce qui permet d'augmenter la densité de compartiments 9, 11 et des conduits 10.

Tel que représenté en figure 1A, on fait circuler de la vapeur d'eau contenant au plus 1 % d'hydrogène, de préférence exclusivement non hydrogénée à chaque cathode 2.1, 2.2 et à l'anode 4.1, 4.2 en tant que gaz drainant. Les flèches 12 et 13 de la figure 1A représentent ainsi clairement le parcours simultané et à la même pression de la vapeur d'eau non hydrogénée dans les compartiments anodiques 9 et cathodiques 11. Il va de soi que dans le cadre de l'invention l'écoulement symbolisé peut tout aussi bien être faite dans l'autre sens (flèches 12 et 13 en sens opposé ou contraires).

Tel que représenté en figure 1B, l'architecture de l'électrolyseur permet en outre de connecter la première extrémité 10.1 du conduit 10 à une alimentation en vapeur d'eau exclusivement non hydrogénée via un autre conduit et de connecter la deuxième extrémité 10.2 du conduit 10 à la fois au compartiment anodique 9 et au compartiment cathodique 11. Les flèches 14 et 15 symbolisent ainsi l'écoulement de retour de la vapeur d'eau non hydrogénée depuis son écoulement dans le conduit 10 (flèches 16) vers respectivement le compartiment anodique 9 et le compartiment cathodique 11.

Par rapport à un électrolyseur EHT classique, la circulation à la fois à l'anode et à la cathode de vapeur d'eau non hydrogénée permet de réduire les risques de fuites susceptibles d'entraîner des pertes de rendement et/ou des casses de tout ou partie de l'électrolyseur qui en découlent.

En particulier, tel que représenté en figure 2, il n'y a pas d'étanchéité sophistiquée à réaliser au niveau de la traversée de l'anode 4.1 par le conduit de collecte 17 de l'hydrogène produit par l'électrolyse selon l'invention. Comme il est d'ailleurs symbolisé dans la zone irrégulière en pointillés sur cette figure 2, en cas de fuite au niveau de cette jonction entre anode 4.1 et conduit de collecte 17 d'hydrogène H₂, il se forme par dilution de l'hydrogène H₂ dans la vapeur d'eau non hydrogénée (nécessairement par conception en surpression par rapport à l'hydrogène et l'oxygène produits par la réaction d'électrolyse) en quelque sorte un coussin d'eau constituant un joint à l'oxygène dégagé au niveau de l'anode 4.1. En d'autres termes, la vapeur d'eau non hydrogénée est utilisée pour créer une zone tampon de dilution entre zones à risque (collecte d'hydrogène et production d'oxygène).

Ainsi, l'électrolyseur a une sureté de fonctionnement améliorée puisque les risques de fuites avec impact susceptibles de générer des pertes de rendement et des casses de tout ou partie sont réduits.

Le fonctionnement de l'électrolyseur décrit ci-dessus peut être ainsi résumé de la manière suivante : la vapeur d'eau non hydrogénée, éventuellement préalablement chauffée, pénètre dans le conduit 10 via le conduit d'alimentation 10.3. Lors de son déplacement dans le conduit 10, elle est chauffée par échange thermique avec la cathode et l'anode bordant la plaque interconnectrice 8.

D'une part, cette vapeur d'eau non hydrogénée chauffée à une température proche de celle de la cellule C1 pénètre dans le compartiment cathodique 11 par l'extrémité 10.2 (flèche 14 de la figure 1B), dans lequel elle subit une réduction en entrant en contact avec la cathode 2.2. De l'hydrogène est alors généré selon la réaction :

2 H₂O→ 2H₂+O₂.

L'hydrogène généré est alors collecté dans le conduit de collecte dédié 17.

D'autre part, simultanément cette vapeur d'eau exclusivement non hydrogénée chauffée pénètre dans le compartiment anodique 9 par l'extrémité 10.2 (flèche 15 de la figure 1B), dans lequel elle constitue un gaz drainant de l'oxygène collectée à l'anode 4.1.

Du fait que seule de la vapeur d'eau non hydrogénée est à prévoir comme alimentation dans l'électrolyseur EHT et qu'il y a moins d'étanchéité à prévoir, les inventeurs ont pensé en outre à loger l'électrolyseur EHT dans une enveloppe étanche et réalisant une atmosphère en gaz inerte ou à la vapeur d'eau non hydrogénée, au lieu comme classiquement de le laisser à l'air libre.

Cela permet ainsi de pouvoir mettre sous pression l'électrolyseur à empilement EHT.

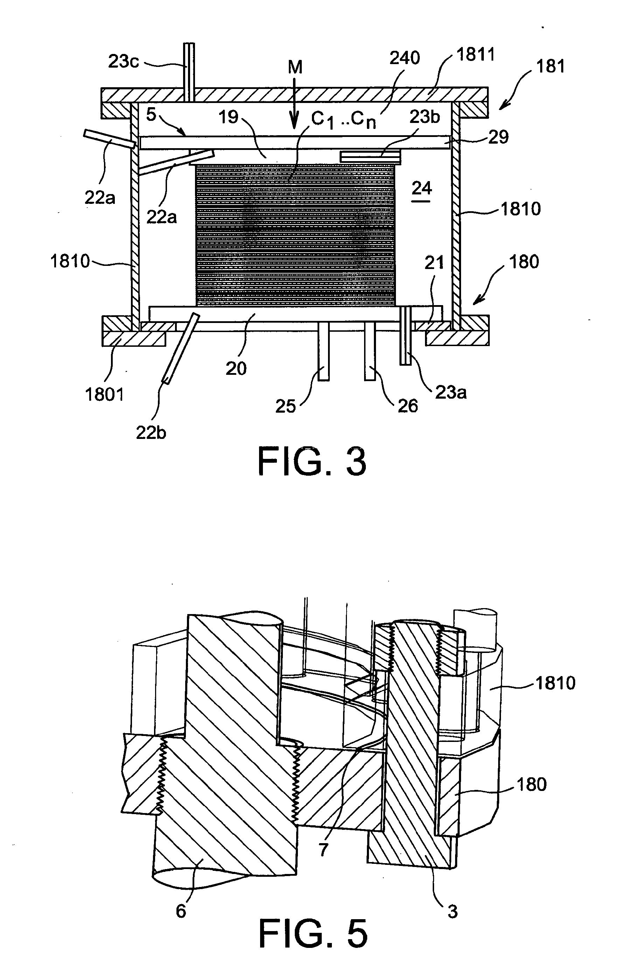

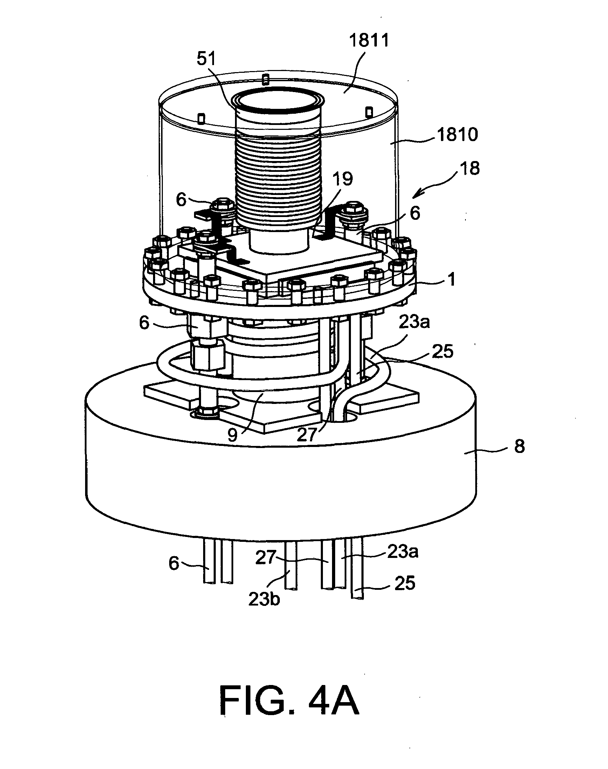

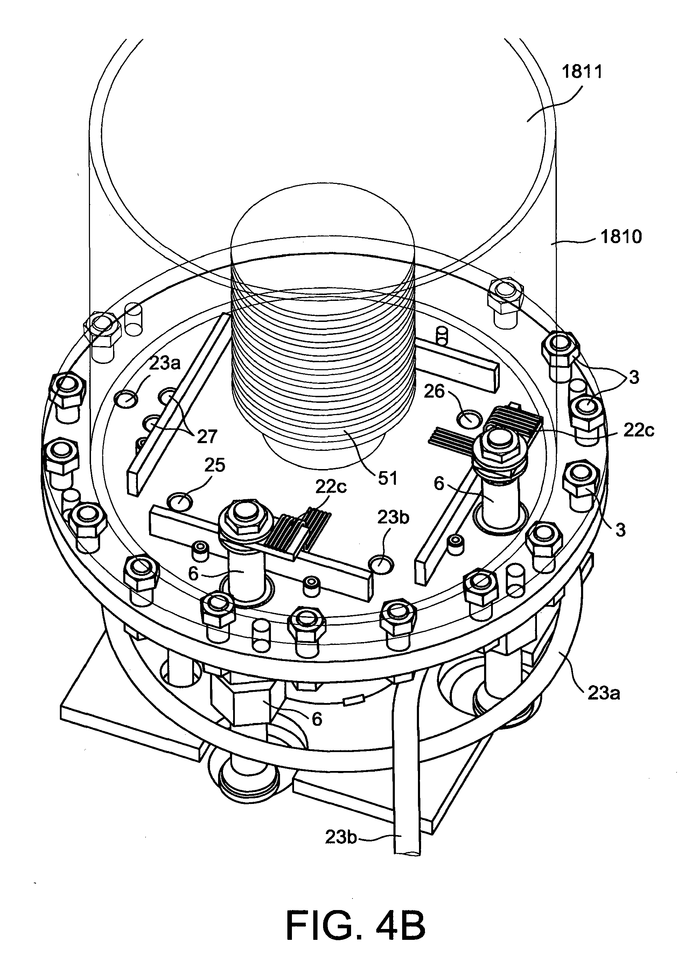

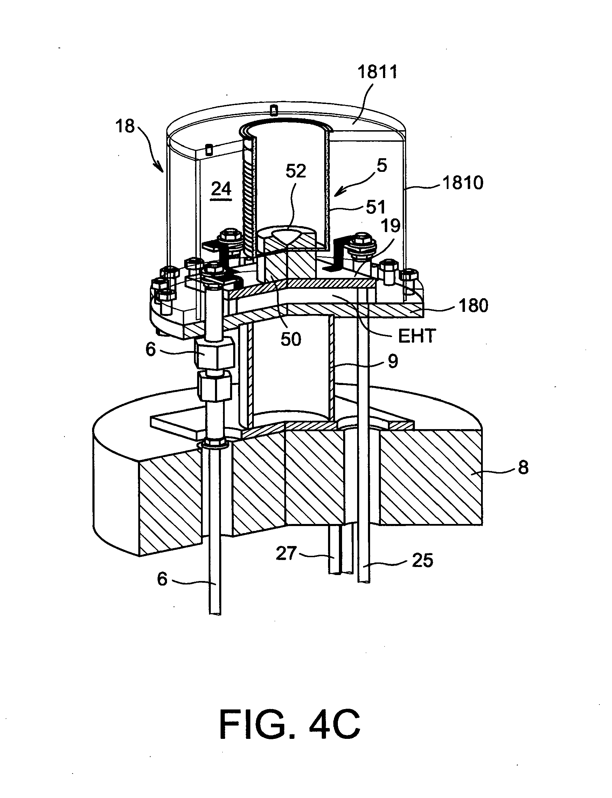

Comme représenté en figures 3 et 4A-4B, un module M peut être ainsi défini avec, en tant qu'enveloppe étanche, un boitier 18 logeant l'électrolyseur EHT décrit ci-dessus. Ce boitier 18 peut être réalisé par assemblage de plusieurs pièces entre elles typiquement par soudage. Grâce aux boitiers 18 selon les figures 3 à 5 et leur montage, on peut faire fonctionner l'électrolyseur EHT typiquement à des pressions de l'ordre de 30 bars.

Plus précisément, le boitier 18 représenté comprend un fond 180 et un couvercle 181 solidarisés entre eux, typiquement par des boulons 3 ou tirants à l'extérieur, comme mieux visible en figure 5.

Le fond 180 est ici constitué d'un support horizontal percé 1801. Comme mieux expliqué par la suite, les différentes connexions de fluide sous la forme de tubes débouchent dans le fond 180, 1801.

Le couvercle 181, quant à lui, est constitué d'une cloison verticale 1810 et d'une cloison horizonatale 1811.

Deux plaques inférieure 19 et supérieure 20 sont agencées en appui avec contact direct de part et d'autre de l'empilement de cellules d'électrolyse C1, C2...Cn. Ces plaques inférieures 19 et supérieure 20 peuvent bien entendu être en contact direct avec une plaque interconnectrice 8 ou constituer chacune une plaque interconnectrice 8

La plaque inférieure 20 peut être en appui contre une pièce en matériau isolant électrique 21 formant cale elle-même en appui contre le fond 1801 du boitier 18, afin d'isoler électriquement l'empilement de cellules d'électrolyse C1, C2...Cn comme prévu dans le mode de réalisation de la figure 3.

La plaque supérieure 19 vient quant à elle exercer un effort de serrage de l'empilement de cellules contre la plaque du dessous, c'est-à-dire un effort de contact déterminé par compression entre les plaques interconnectrices 8 et les électrodes 2, 4 de l'empilement de cellules C1, ....Cn, grâce à des moyens de serrage 5 détaillés ci-après

De préférence, le couvercle 181 et le fond 180 du boitier ainsi que les plaques inférieure 19 et supérieure sont en acier réfractaire de type AISI 310

Pour amener le courant électrique à l'empilement de cellules C1, C2...Cn, des connexions électriques 22a, 22b, 22c sont prévues. Dans le mode de réalisation de la figure 3, ces connexions électriques 22a, 22b sont prévues d'une part depuis l'extérieur du boitier 18 à la cloison verticale 1810 et de cette cloison 1810 à la plaque supérieure 19 (connexions 22a) et d'autre part de l'extérieur du boitier à la plaque inférieure 20 (connexion 22b). Dans le mode de réalisation des figures 4A à 4C, l'alimentation électrique est assurée au moyen de trois passages étanches isolants électriques 6 au travers du fond 180 du boitier 18 et soudés de préférence à celui-ci. Typiquement, il peut s'agir de raccords électrique de marque Spectite® permettant chacun le passage d'un courant de l'ordre de 30 ampères sans contact électrique avec leur fixation au boitier. Ces raccords comprennent chacun en leur sein une connexion électrique 22c. Pour finaliser la connexion électrique, on peut envisager d'utiliser des fils conducteurs typiquement en Nickel qui relie chaque connexion 22c à la plaque supérieure 19.

Une connexion fluidique 23a est prévue pour amener la vapeur d'eau non hydrogénée sous pression à l'intérieur 24 de l'enveloppe étanche constituée par le boitier 18. Cette connexion 23a traverse la le fond 180

Il est prévu une autre connexion fluidique 23b pour amener la vapeur d'eau non hydrogénée sous pression à l'intérieur de l'électrolyseur EHT à empilement de cellules C1, C2..,Cn. Ainsi, la vapeur d'eau est sensiblement à la même pression au niveau de chaque anode et de chaque cathode.

Dans le mode de réalisation de la figure 3, cette autre connexion 23b permet l'alimentation de la vapeur d'eau depuis l'intérieur 24 du boitier étanche 18 et traverse la plaque supérieure 19. Dans le mode de réalisation des figures 4A à 4C, cette autre connexion 23b permet l'alimentation de la vapeur d'eau dans l'empilement de cellules d'électrolyse indépendamment de l'alimentation de la vapeur d'eau à l'intérieur 24 du boitier étanche 18. Par ailleurs, comme représenté, une connexion fluidique 25 traversant la plaque inférieure 20 et le fond 180 du boitier 18 est prévue pour collecter l'hydrogène H₂ produit par l'électrolyse aux différentes cathodes de l'empilement de l'EHT.

Enfin, une autre connexion fluidique 26 traversant également la plaque inférieure 20 et le fond 180 du boitier 18 est prévue pour collecter l'oxygène O₂ produit aux différentes anodes de l'empilement de l'EHT.

De préférence, tous les tubes d'alimentation 23a, 23b de vapeur d'eau ou de collecte d'hydrogène 25 et d'oxygène 26 produits dans l'EHT à empilement sont en acier inoxydable AISI 316L.

Tel que réprésenté aux figures 4A à 4C, on peut prévoir d'amener des tubes 27 également au travers du fond 180 du boitier 18 pour faire passer des moyens d'instrumentation permettant notamment de contrôler la composition de la vapeur d'eau faiblement hydrogénée, sa pression, sa température...Pour assurer l'étanchéité entre l'intérieur du boitier étanche 24 et l'extérieur, seul(s) un ou quelques joints 7 de conception simple sont à prévoir. Dans le mode de réalisation de la figure 3, ces joints peuvent être agencés respectivement entre la cale isolante 21 et le support 1801, entre la cale isolante et la plaque inférieure 20, entre le couvercle 181 et la cloison verticale 1800 et entre le support 1801 et la cloison verticale 1800. Dans le mode de réalisation des figures 4A à 4C, seul un joint 7 peut être agencé à la périphérie entre fond 180 et cloison verticale 1810 du couvercle 181. On a représenté en figure 5, un tel agencement préféré d'un joint 7. Ce joint 7 de section circulaire a une forme générale torique et tel que montré il est écrasé au montage par serrage des boulons 3, entre la cloison 1810 et le fond 180. De préférence, on utilise un joint 7 en or pour ses qualités d'oxydation moindre et d'écrasement, qui permettent outre une parfaite étanchéité, un montage/démontage aisés.

Des moyens de serrage 5 sont agencés au moins en partie à l'intérieur 24 du boitier étanche 18 pour assurer l' effort de serrage déterminé par compression de l'empilement de cellules d'électrolyse entre les plaques supérieure 19 et inférieure 20.

Dans le mode de réalisation de la figure 3, les moyens de serrage 5 comprennent une plaque supplémentaire 29 montée avec ajustement avec jeu par rapport à la cloison verticale 1810 du boitier 18. Cette plaque supplémentaire 29 est en contact direct avec la plaque supérieure 19. La plaque supplémentaire 29 peut être déplacée par la vapeur d'eau contenant au plus 1 % d'hydrogène depuis l'extérieur du boitier à travers le couvercle 181 par une autre connexion fluidique 23c. La vapeur d'eau faiblement ou non hydrogénée entre ici dans la chambre 240 créée entre la plaque supplémentaire 29 et le couvercle 181 et elle fuit latéralement dans le jeu de l'ajustement permettant ainsi d'alimenter au moins partiellement en vapeur d'eau contenant au plus 1 % d'hydrogène l'empilement de cellules grâce à la perte de charge générée par la fuite. La connexion fluidique 23a sert ici d'entrée secondaire pour la vapeur d'eau non hydrogénée afin d'ajuster le débit nécessaire à l'empilement pour réaliser l'électrolyse. Le déplacement de la plaque supplémentaire 29 génère l'effort de serrage par compression entre les plaques inférieures 20 et supérieure 19. Autrement dit, ici, les moyens de serrage 5 sont assurés de manière pneumatique par de la vapeur d'eau faiblement ou non hydrogénée qui sert également à l'alimentation de l'empilement de cellules EHT en vue de l'électrolyse.

Dans le mode de réalisation des figures 4A à 4C, les moyens de serrage 5 sont adaptés pour appliquer une charge par gravité non représentée depuis l'extérieur au travers d'un soufflet métallique 51 tout en assurant l'isolation électrique de l'empilement par rapport au boitier étanche 18. Ce soufflet métallique 51 est soudé au couvercle 181 du boitier, plus exactement à la cloison horizontale 1811. Ainsi, en fonctionnement de l'électrolyseur, le soufflet 51 est maintenu aux températures de fonctionnement, typiquement entre 600°C et 1000°C, qui sont les températures de la vapeur d'eau alimentant l'intérieur 24 du boitier. De plus, le soufflet 52 est au potentiel électrique du fond 180 du boitier 18. La charge gravitaire appuie sur l'empilement de l'électrolyseur EHT au moyen d'une pièce isolante 50 et de la première masse 52. La pièce isolante 50 peut être avantageusement un rond en alumine. Par l'intérieur du soufflet 51, il est possible de transmettre via une tige en appui sur la première masse 52, les efforts de serrage proportionnels à des masses qui constituent la charge gravitaire. Ces masses sont agencées à l'extérieur du boitier 18 et le cas échéant à l'extérieur d'un four dans lequel le boitier 18 peut être agencé. Un tel four permet de faire monter en température et maintenir à des hautes températures d'électrolyse (600-1000°C), le boitier 18 et la vapeur d'eau en son sein.

L'avantage du mode de réalisation des figures 4A à 4c par rapport au mode de réalisation de la figure 3 est essentiellement d'assurer un découplage total entre alimentation électrique de l'empilement, alimentation en vapeur d'eau faiblement ou non hydrogéné de l'empilement, alimentation en vapeur d'eau faiblement ou non hydrogéné de l'intérieur du boitier étanche, serrage par compression de l'empilement des cellules d'électrolyse.

Ainsi, dans le mode de réalisation des figures 4A à 4C, l'intérieur 24 du boitier 18 peut être alimenté aisément en un gaz inerte vis-vis de l'O₂ et H₂ produits et les moyens de serrage 5 sont mécaniques et peuvent être aisément contrôlés depuis l'extérieur du boitier (charge par gravité) sans qu'il y ait une conséquence sur la vapeur d'eau alimentant l'empilement.

Comparativement, un module de la figure 3 réalisé avec un boitier étanche contenant un gaz inerte à l'intérieur nécessite d'autres connexions fluidiques différentes pour alimenter en vapeur d'eau l'électrolyseur EHT.

En outre, à des fins de simplicité de montage et d'utilisation, le boitier 18 est agencé sur un socle 8 par l'intermédiaire d'un pied 9.L'invention qui vient d'être décrite et qui consiste à faire circuler concomitamment à l'anode et à la cathode de la vapeur d'eau exclusivement non hydrogénée, à loger l'électrolyseur EHT à empilement dans le boitier étanche, à garantir et contrôler le serrage par compression de l'empilement depuis l'extérieur du boitier étanche ainsi que la contre pression de la vapeur d'eau. Cela permet d'une part d'améliorer la sureté de fonctionnement d'un électrolyseur en diminuant les risques de fuite avec impact notable, c'est-à-dire celles susceptibles d'entraîner des pertes de rendement et/ou des casses et d'autre part maintenir un rendement élevé du fait de la qualité de conduction électrique dans l'empilement

Grâce à l'invention, le nombre d'étanchéités à réaliser étant moindre, la réalisation d'un électrolyseur à hautes températures peut être simplifiée.

Bien que non détaillé, il va de soi qu'une ou plusieurs couches de matériaux peuvent être déposées sur chacun des trois constituants (anode, cathode, électrolyte) d'une cellule ainsi que sur les interconnecteurs ou plaques interconnectrices.

## Revendications

1. Module (M) pour électrolyse à hautes températures, comprenant :
- une enveloppe étanche adaptée pour contenir de la vapeur d'eau contenant au plus 1 % d'hydrogène ou un gaz inerte,
- un empilement de cellules d'électrolyse élémentaires (C1, C2,...Cn) formées chacune d'une cathode (2.1, 2.2), d'une anode (4.1, 4.2) et d'un électrolyte (6.1, 6.2) intercalé entre la cathode et l'anode, au moins une plaque interconnectrice (8) étant agencée entre deux cellules élémentaires adjacentes et en contact électrique avec une électrode d'une des deux cellules élémentaires et une électrode de l'autre des deux cellules élémentaires, la plaque interconnectrice comportant au moins un compartiment cathodique (11) et au moins un compartiment anodique (9) pour la circulation de gaz respectivement à la cathode et l'anode, l'empilement de cellules d'électrolyse étant logé dans l'enveloppe étanche,
dans lequel l'enveloppe étanche est constituée d'un boitier (18) comprenant un fond (180, 1801) et un couvercle (181, 1810, 1811) solidarisés entre eux, l'empilement de cellules d'électrolyses élémentaires étant assemblé entre deux plaques (19, 20), dont la plaque inférieure (20) est en appui contre le fond (180, 1801) du boitier par l'intermédiaire d'un isolant électrique (21).
dans lequel des moyens de serrage (29) sont agencés au moins en partie entre la plaque supérieure (19) le couvercle (181) du boitier, les moyens de serrage étant adaptés pour fournir un effort de contact déterminé par compression entre les plaques inférieure (20) et supérieure (19) de l'empilement de cellules,
dans lequel des moyens de serrage comprennent une plaque supplémentaire (29) montée avec ajustement avec jeu dans le boitier et en contact direct avec la plaque supérieure (19), la plaque supplémentaire étant adaptée pour être déplacée par la vapeur d'eau contenant au plus 1 % d'hydrogène depuis l'extérieur du boitier à travers le couvercle, le déplacement de la plaque supplémentaire générant l'effort de serrage entre les plaques inférieure et supérieure, le jeu de l'ajustement permettant d'alimenter au moins partiellement en vapeur d'eau contenant au plus 1 % d'hydrogène l'empilement de cellules.

2. Module (M) pour électrolyse à hautes températures, comprenant :
- une enveloppe étanche adaptée pour contenir de la vapeur d'eau contenant au plus 1 % d'hydrogène ou un gaz inerte,
- un empilement de cellules d'électrolyse élémentaires (C1, C2,...Cn) formées chacune d'une cathode (2.1, 2.2), d'une anode (4.1, 4.2) et d'un électrolyte (6.1, 6.2) intercalé entre la cathode et l'anode, au moins une plaque interconnectrice (8) étant agencée entre deux cellules élémentaires adjacentes et en contact électrique avec une électrode d'une des deux cellules élémentaires et une électrode de l'autre des deux cellules élémentaires, la plaque interconnectrice comportant au moins un compartiment cathodique (11) et au moins un compartiment anodique (9) pour la circulation de gaz respectivement à la cathode et l'anode, l'empilement de cellules d'électrolyse étant logé dans l'enveloppe étanche,
dans lequel l'enveloppe étanche est constituée d'un boitier (18) comprenant un fond (180, 1801) et un couvercle (181, 1810, 1811) solidarisés entre eux, l'empilement de cellules d'électrolyses élémentaires étant assemblé entre deux plaques (19, 20), dont la plaque inférieure (20) est directement en appui contre le fond (180, 1801) du boitier,
dans lequel des moyens de serrage (5, 50, 51, 52) sont agencés au moins en partie entre la plaque supérieure (19) et le couvercle (181) du boitier, les moyens de serrage étant adaptés pour fournir un effort de contact déterminé par compression entre les plaques inférieure (20) et supérieure (19) de l'empilement de cellules,
dans lequel des moyens de serrage (5, 50, 51, 52) sont adaptés pour appliquer une charge par gravité depuis l'extérieur du boitier, sur la plaque supérieure (19) au travers d'un soufflet (51) solidarisé avec étanchéité au couvercle (180) du boitier, une pièce électriquement isolante (50) qui permet de transmettre la charge appliquée étant agencée à l'intérieur du boitier entre le soufflet et la plaque supérieure.

3. Module (M) pour électrolyse à hautes températures, selon la revendication 2, comprenant des raccords (6) agencés au travers du fond (180) du boitier sans contact électrique avec leur fixation à celui-ci et permettant la connexion électrique à l'empilement de cellules d'électrolyse depuis l'extérieur du boitier.

4. Ensemble comprenant :
- un module pour électrolyse à hautes températures selon l'une des revendications 1 à 3,
- une source d'alimentation en vapeur d'eau contenant au plus 1 % d'hydrogène ou en gaz inerte reliée à l'intérieur de l'enveloppe étanche du module.

5. Ensemble selon la revendication 4, selon lequel le gaz inerte est choisi parmi l'azote ou l'argon.

## Patentansprüche

1. Modul (M) für Elektrolyse bei hohen Temperaturen, umfassend:
- eine dichte Hülle, die dazu angepasst ist, Wasserdampf zu enthalten, der höchstens 1 % Wasserstoff oder Inertgas enthält,
- einen Stapel von Elementar-Elektrolyse-Zellen (C1, C2, ..., Cn), die jeweils aus einer Kathode (2.1, 2.2), einer Anode (4.1, 4.2) und einem zwischen der Kathode und der Anode angeordneten Elektrolyten (6.1, 6.2) gebildet sind, wobei wenigstens eine Verbindungsplatte (8) zwischen zwei benachbarten Elementar-Zellen angeordnet ist und in elektrischem Kontakt mit einer Elektrode von einer der zwei Elementar-Zellen und mit einer Elektrode von der anderen der zwei Elementar-Zellen steht, wobei die Verbindungsplatte wenigstens einen KathodenRaum (11) und wenigstens einen Anoden-Raum (9) für die Zirkulation von Gas zur Kathode bzw. zur Anode umfasst, wobei der Stapel von Elektrolyse-Zellen in der dichten Hülle aufgenommen ist,
wobei die dichte Hülle aus einem Gehäuse (18) mit einem Boden (180, 1801) und einem Deckel (181, 1810, 1811) gebildet ist, die miteinander verbunden sind, wobei der Stapel von Elementar-Elektrolyse-Zellen zwischen zwei Platten (19, 20) montiert ist, von denen die untere Platte (20) über einen elektrischen Isolator (21) an dem Boden (180, 1801) des Gehäuses anliegt,
wobei Spann-Mittel (29) wenigstens teilweise zwischen der oberen Platte (19) und dem Deckel (181) des Gehäuses angeordnet sind, wobei die Spann-Mittel angepasst sind, um eine bestimmte KontaktKraft durch Kompression zwischen der unteren Platte (20) und der oberen Platte (19) des Zellen-Stapels zu liefern,
wobei die Spann-Mittel eine Zusatz-Platte (29) umfassen, die mit einer Einstellung mit Spiel in dem Gehäuse montiert ist, und in direktem Kontakt mit der oberen Platte (19), wobei die Zusatz-Platte angepasst ist, um von dem Äußeren des Gehäuses her durch den Deckel hindurch durch den Wasserdampf verlagert zu werden, der höchstens 1 % Wasserstoff enthält, wobei die Verlagerung der Zusatz-Platte die Spann-Kraft zwischen der unteren und der oberen Platte erzeugt, wobei das Spiel der Einstellung es erlaubt, den Zellen-Stapel wenigstens teilweise mit Wasserdampf zu versorgen, der höchstens 1 % Wasserstoff enthält.

2. Modul (M) für Elektrolyse bei hohen Temperaturen, umfassend:
- eine dichte Hülle, die dazu angepasst ist, Wasserdampf zu enthalten, der höchstens 1 % Wasserstoff oder Inertgas enthält,
- einen Stapel von Elementar-Elektrolyse-Zellen (C1, C2, ..., Cn), die jeweils aus einer Kathode (2.1, 2.2), einer Anode (4.1, 4.2) und einem zwischen der Kathode und der Anode angeordneten Elektrolyten (6.1, 6.2) gebildet sind, wobei wenigstens eine Verbindungsplatte (8) zwischen zwei benachbarten Elementar-Zellen angeordnet ist und in elektrischem Kontakt mit einer Elektrode von einer der zwei Elementar-Zellen und mit einer Elektrode von der anderen der zwei Elementar-Zellen steht, wobei die Verbindungsplatte wenigstens einen KathodenRaum (11) und wenigstens einen Anoden-Raum (9) für die Zirkulation von Gas zur Kathode bzw. zur Anode umfasst, wobei der Stapel von Elektrolyse-Zellen in der dichten Hülle aufgenommen ist,
wobei die dichte Hülle aus einem Gehäuse (18) mit einem Boden (180, 1801) und einem Deckel (181, 1810, 1811) gebildet ist, die miteinander verbunden sind, wobei der Stapel von Elementar-Elektrolyse-Zellen zwischen zwei Platten (19, 20) montiert ist, von denen die untere Platte (20) direkt an dem Boden (180, 1801) des Gehäuses anliegt,
wobei Spann-Mittel (5, 50, 51, 52) wenigstens teilweise zwischen der oberen Platte (19) und dem Deckel (181) des Gehäuses angeordnet sind, wobei die Spann-Mittel angepasst sind, um eine bestimmte Kontakt-Kraft durch Kompression zwischen der unteren Platte (20) und der oberen Platte (19) des Zellen-Stapels zu liefern,
wobei die Spann-Mittel (5, 50, 51, 52) angepasst sind, um eine Last durch Schwerkraft von dem Äußeren des Gehäuses aus auf die obere Platte (19) durch einen Balg (51) auszuüben, der dicht mit dem Deckel (180) des Gehäuses verbunden ist, wobei ein elektrisch isolierendes Teil (50), das es ermöglicht, die ausgeübte Last zu übertragen, im Inneren des Gehäuses zwischen dem Balg und der oberen Platte angeordnet ist.

3. Modul (M) für Elektrolyse bei hohen Temperaturen nach Anspruch 2, umfassend Anschlüsse (6), die durch den Boden (180) des Gehäuses hindurch ohne elektrischen Kontakt mit ihrer Befestigung an diesem angeordnet sind, und die die elektrische Verbindung mit dem Stapel von Elektrolyse-Zellen von dem Äußeren des Gehäuses aus ermöglichen.

4. Anordnung, umfassend:
- ein Modul für Elektrolyse bei hohen Temperaturen nach einem der Ansprüche 1 bis 3.
- eine mit dem Inneren der dichten Hülle des Moduls verbundene Versorgungsquelle für Wasserdampf, der höchstens 1 % Wasserstoff oder Inertgas enthält.

5. Anordnung nach Anspruch 4,
wobei das Inertgas ausgewählt ist aus Stickstoff oder Argon.

## Claims

1. A module (M) for high-temperature electrolysis, including:
- a sealed casing designed to contain steam containing at most 1% hydrogen, or an inert gas,
- a stack of elementary electrolysis cells (C1, C2,...Cn), each formed of a cathode (2.1, 2.2), an anode (4.1, 4.2) and an electrolyte (6.1, 6.2) sandwiched between the cathode and the anode, where at least one interconnecting plate (8) is fitted between two adjacent elementary cells, in electrical contact with an electrode of one of the two elementary cells and an electrode of the other of the two elementary cells, where the interconnecting plate includes at least one cathodic compartment (11) and at least one anodic compartment (9) for gas to flow respectively in the cathode and in the anode, and where the stack of electrolysis cells is housed in the sealed casing,
in which the sealed casing consists of a case (18) including a base (180, 1801) and a cover (181, 1810, 1811) which are securely attached to one another, where the stack of elementary electrolysis cells is assembled between two plates (19, 20), the lower plate (20) of which is resting on the base (180, 1801) of the box through an electrical insulator (21),
in which clamping means (29) are fitted at least partly between the upper plate (19) and the cover (181) of the case, where the clamping means are designed to provide a determined contact force by compression between the lower plate (20) and upper plate (19) of the stack of cells,
in which clamping means include an additional plate (29) installed with a loose fit in the case and in direct contact with the upper plate (19), where the additional plate is designed to be moved by the steam containing at most 1% hydrogen from outside the case through the cover, where the movement of the additional plate causes a clamping force between the lower and upper plates, and where the fit enables the stack of cells to be supplied at least partially with steam containing at most 1% hydrogen.

2. A module (M) for high-temperature electrolysis, including:
- a sealed casing designed to contain steam containing at most 1% hydrogen, or an inert gas,
- a stack of elementary electrolysis cells (C1, C2,...Cn), each formed of a cathode (2.1, 2.2), an anode (4.1, 4.2) and an electrolyte (6.1, 6.2) sandwiched between the cathode and the anode, where at least one interconnecting plate (8) is fitted between two adjacent elementary cells, in electrical contact with an electrode of one of the two elementary cells and an electrode of the other of the two elementary cells, where the interconnecting plate includes at least one cathodic compartment (11) and at least one anodic compartment (9) for gas to flow respectively in the cathode and in the anode, and where the stack of electrolysis cells is housed in the sealed casing,
in which the sealed casing consists of a case (18) including a base (180, 1801) and a cover (181, 1810, 1811) which are securely attached to one another, where the stack of elementary electrolysis cells is assembled between two plates (19, 20), the lower plate (20) of which is resting directly on the base (180, 1801) of the box,
in which clamping means (5, 50, 51, 52) are fitted at least partly between the upper plate (19) and the cover (181) of the case, where the clamping means are designed to provide a determined contact force by compression between the lower plate (20) and upper plate (19) of the stack of cells,
in which clamping means (5, 50, 51, 52) are designed to apply a gravitational load from outside the case, on the upper plate (19) through a bellows (51) which is securely attached, forming a seal, to the cover (180) of the case, and where an electrically insulating part (50) which enables the applied load to be transmitted is fitted to the interior of the case between the bellows and the upper plate.

3. A module (M) for high-temperature electrolysis, according to claim 2, including connections (6) fitted through the base (180) of the case without any electrical contact with their attachment to the case, and allowing electrical connection to the stack of electrolysis cells from outside the case.

4. An assembly including:
- a module for high-temperature electrolysis according to one of the claims 1 to 3,
- a source of supply of steam containing at most 1% hydrogen, or of inert gas, connected to the interior of the module's sealed casing.

5. An assembly according to claim 4, according to which the inert gas is chosen from among nitrogen or argon.
